# EUROPÄISCHE PATENTANMELDUNG

(11) **EP 0 959 085 A1**
(43) Veröffentlichungstag der Anmeldung: **24.11.1999**
(21) Anmeldenummer: 99108505.1
(22) Anmeldetag: 30.04.1999
(51) Int. Cl.: C08G 18/10, C08G 18/80, C09D 175/04

(54) **Beschichtungsmittel, die geblockte Polyurethanprepolymere enthalten und deren Verwendung**

(30) Priorität: 20.05.1998 DE 19822631
(71) Anmelder: BASF Coatings AG, 48165 Münster (DE)
(72) Erfinder: Figge, Hans-Jürgen, 48149 Münster (DE); Wigger, Georg, 48308 Senden (DE); Schilling, Marita, 48165 Münster (DE)
(74) Vertreter: Fitzner, Uwe, Dr.

(57) **Zusammenfassung**

Die Erfindung betrifft ein Überzugsmittel enthaltend zumindest eine OH-funktionelle Bindemittelkomponente und zumindest eine als Vernetzungsmittel funktionierende Verbindungskomponente mit mit einer Pyrazolverbindung geblockten NCO-Gruppen. Sie ist dadurch gekennzeichnet, daß die als Vernetzungsmittel funktionierende Verbindungskomponente erhältlich ist, indem a) ein Polyol oder eine Mischung aus Polyolen mit einem zahlenmittleren Molekulargewicht im Bereich von 300 - 5000 durch Zugabe einer Polyisocyanatverbindung A oder einer Mischung aus Polyisocyanatverbindungen A zu einem Polyurethanprepolymer polymerisiert wird, b) das Polyurethanprepolymer durch Zugabe einer Kettenverlängerungsverbindung zu einem Polyurethanpolymer mit freien OH-Gruppen kettenverlängert wird, c) das OH-gruppenhaltige Polyurethanpolymer aus b) mit einem Polyisocyanat B oder einer Mischung aus Polyisocyanaten B zu einem Polyisocyanat-Polyurethan-Polymer umgesetzt wird und d) freie Isocyanatgruppen des Polyisocyanat-Polyurethan-Polymers mit der Pyrazolverbindung oder einer Mischung aus Pyrazolverbindungen blockiert worden sind.

## Beschreibung

Die Erfindung betrifft ein Überzugsmittel enthaltend zumindest eine OH-funktionelle Bindemittelkomponente und zumindest eine als Vernetzungsmittel funktionierende Verbindungskomponente mit mit einer Pyrazolverbindung geblockten NCO-Gruppen. - Überzugsmittel dienen der Beschichtung eines Substrates mit einem (oder mehreren) Überzügen, die eine das Substrat schützende, insbesondere korrosionsschützende, Funktion, eine Oberflächenunebenheiten egalisierende Füllerfunktion und/oder eine dekorative Funktion haben können. Solche Überzugsmittel bezeichnet man als Grundierung, Füller und Decklack. Sofern der dekorative Decklack nicht die oberste Schicht darstellen soll aufgrund einer subsequenten Überschichtung mit einer zusätzlich schützenden Klarlackbeschichtung, so wird er auch als Basislack bezeichnet. Der Ausdruck der Komponente bzw. Verbindungskomponente soll ausdrücken, das die jeweiligen Komponenten als verschiedene Substanzen in dem Überzugsmittel eingesetzt sein können, oder daß die Komponenten Teile einer einzigen Substanz sein können. Ist eine OH-funktionelle Bindemittelkomponente eine Substanz, die gleichzeitig die als Vernetzungsmittel funktionierende Verbindungskomponente enthält, so ist diese selbstvernetzend. Handelt es sich dagegen um verschiedene Substanzen, so liegt eine übliche Substanzpaarung aus Bindemittel und Vernetzer vor. Im Rahmen einer Vernetzungsreaktion reagieren frei NCO-Gruppen mit freien OH-Gruppen. Geblockte Isocyanatgruppen sind Isocyanatgruppen, die mit einer Schutzgruppe versehen sind und bei Raumtemperatur nicht oder praktisch nicht reaktiv gegenüber freien OH-Gruppen sind. Ein Überzugsmittel des eingangs genannten Aufbaus ist daher lange lagerbar, ohne daß eine die Verarbeitung störende Vorvernetzung stattfindet. Nach der Verarbeitung werden die Schutzgruppen durch lediglich Wärmeeinwirkung, dem sogenannten Binbrennen, entfernt und die NCO-Gruppen wieder aktiviert, so daß die dann gewünschte Vernetzungsreaktion und folglich die Aushärtung des hergestellten Überzuges erfolgen kann. Die Verwendung von Pyrazolverbindungen als Schutzgruppen hat insbesondere den Vorteil, daß die Aktivierung der NCO-Gruppen und folglich das Einbrennen bzw. Aushärten bei relativ niedrigen Temperaturen erfolgen kann (sogenanntes low-bake-Verfahren).

Überzugsmittel der eingangs genannten Zusammensetzung sind aus den Literaturstellen EP 0 159 117, EP 0 682 051 und WO 95/06674 bekannt. Bei den insofern bekannten Überzugsmitteln wird eine OH-funktionelle Bindemittelkomponente mit einer als Vernetzungsmittel funktionierenden separaten Polyisocyanat-Verbindung vernetzt, wobei diese separate Polyisocyanat-Verbindung von üblichem und einfachen Aufbau ist und die NCO-Gruppen mit einer Pyrazolverbindung geblockt sind. Im Falle der EP 0 682 051 und WO 95/06674 wird neben der Pyrazol-Verbindung eine herkömmliche Blokkierungsverbindung zusätzlich eingesetzt. Die beschriebenen Polyisocyanat-Verbindungen sind nicht selbstvernetzend ausführbar.

Aus der Literaturstelle EP 0 688 603 ist ein flexibilisierter Kunststoff, insbesondere für den Baubereich, bekannt, bei welchem eine aminfunktionelle Substanz mit einem Isocyanatprepolymer mit blockierten NCO-Gruppen, welches auf Basis von aromatischen Diisocyanaten und Polyetheralkoholen aufgebaut ist, gehärtet wird. Die NCO-Gruppen sind mit verschiedenen Blockierungsverbindungen, u.a. einer Pyrazolverbindung, blockiert.

Die insofern bekannten Überzugsmittel sind in verschiedenerlei Hinsicht verbesserungsfähig. Einerseits ist es wünschenswert, die Einbrenntemperatur herabzusetzen. Andererseits müssen dennoch die üblichen Eigenschaften, insbesondere eine gute Schleifbarkeit und guter Decklackstand in Verbindung mit konventionellen und wasserverdünnbaren (dekorativen) Basislacken in Falle eines Füllers, zumindest erhalten bleiben.

Der Erfindung liegt demgegenüber das technische Problem zugrunde, ein im Einbrennverhalten verbessertes Überzugsmittel zu schaffen, welches Überzüge ergibt, die allen lacktechnischen Anforderungen genügen.

Zur Lösung dieses technischen Problems lehrt die Erfindung, daß die als Vernetzungsmittel funktionierende Verbindungskomponente erhältlich ist, indem a) ein Polyol oder eine Mischung aus Polyolen mit einem zahlenmittleren Molekulargewicht im Bereich von 300 - 5000 durch Zugabe einer Polyisocyanatverbindung A oder einer Mischung aus Polyisocyanatverbindungen A zu einem Polyurethanprepolymer polymerisiert wird, b) das Polyurethanprepolymer durch Zugabe einer Kettenverlängerungsverbindung zu einem Polyurethanpolymer mit freien OH-Gruppen kettenverlängert wird, c) das OH-gruppenhaltige Polyurethanpolymer aus b) mit einem Polyisocyanat B oder einer Mischung aus Polyisocyanaten B zu einem Polyisocyanat-Polyurethan-Polymer umgesetzt wird und d) freie Isocyanatgruppen des Polyisocyanat-Polyurethan-Polymers mit der Pyrazolverbindung oder einer Mischung aus Pyrazolverbindungen blockiert worden sind. - Der Kern der Erfindung besteht demnach barin, daß einerseits ein spezifisch aufgebautes OH-gruppenhaltiges Polyurethanpolymer aus einem Polyurethanprepolymer hergestellt wird, und daß andererseits daraus mit einem Polyisocyanat B ein Polyisocyanat-Polyurethan-Polymer gebildet wird, wobei gezielt ein bestimmter Anteil, bis zu 100%, der NCO-Gruppen des Polyurethanprepolymers bereits mit einer Pyrazolverbindung blockiert sind. Überraschenderweise ist ein erfindungsgemäßes Überzugsmittel nicht nur bei niedriger Temperatur aushärtbar, sondern zeigt auch verbesserte Eigenschaften, insbesondere eine sehr gute Schleifbarkeit.

In einer bevorzugten Ausführungsform der Erfindung ist die als Vernetzungsmittel funktionierende Verbindungskomponente erhältlich, indem ein Teil der freien Isocyanatgruppen des Polyurethanprepolymers und/oder ein Teil der freien Isocyanatgruppen des Polyisocyanats B vor der Kettenverlängerung mit der Pyrazol-Verbindung oder der Mischung aus Pyrazol-Verbindungen geblockt werden.

Ein erfindungsgemäßes Überzugsmittel kann im einzelnen auf verschiedene Weisen ausgeführt sein. Soll die als Vernetzungsmittel funktionierende Verbindungskomponente fremdvernetzend sein, so empfiehlt es sich, daß alle freien OH-Gruppen des kettenverlängerten Polyurethanpolymers mit dem Polyisocyanat B oder der Mischung aus Polyisocyanaten B umgesetzt werden und daß die OH-funktionelle Bindemittelkomponente eine von der als Vernetzungsmittel funktionierenden Verbindungskomponente verschiedene Substanz ist. Soll dagegen die als Vernetzungsmittel funktionierende Verbindungskomponente selbstvernetzend sein, in welchem Falle ggf. auf eine separate OH-funktionelle Bindemittelkomponente verzichtet werden kann (aber nicht muß), so empfiehlt es sich, daß nur ein Teil der freien OH-Gruppen des kettenverlängerten Polyurethanpolymers mit dem Polyisocyanat B oder der Mischung aus Polyisocyanaten B umgesetzt wird und daß zumindest eine OH-funktionelle Bindemittelkomponente identisch mit der als Vernetzungsmittel funktionierenden Verbindungskomponente ist.

In einer bevorzugten Ausführungsform wird so gearbeitet, daß die Kettenverlängerungsverbindung eine sekundäre Amingruppe sowie zumindest zwei OH-Gruppen aufweist. In diesem Fall reagiert zunächst eine sekundäre Amingruppe mit einem Polyurethanprepolymermolekül. Dann reagiert eine der beiden OH-Gruppen mit einem anderen Polyurethanprepolymermolekül. Je nach dem, in welchen Mengenverhältnissen Polyisocyanat B eingesetzt wird, erhält man eine OH-gruppenhaltige, als Vernetzungsmittel funktionierende Verbindung oder eine von OH-Gruppen praktisch freie Verbindung.

Zur Erleichterung des Verständnisses der Erfindung werden folgend idealisierte Moleküle der beiden vorstehend beschriebenen Varianten der als Vernetzungsmittel funktionierenden Verbindungskomponente dargestellt. Bei dem Molekül (1) handelt es sich um eine von OH-Gruppen praktisch freie Verbindung. Diese wird in ansonsten üblicher Weise zusammen mit einer separaten OH-funktionellen Bindemittelkomponente eingesetzt. Bei dem Molekül (2) handelt es sich um eine OH-gruppenhaltigen Verbindung, die folglich selbstvernetzend ist.

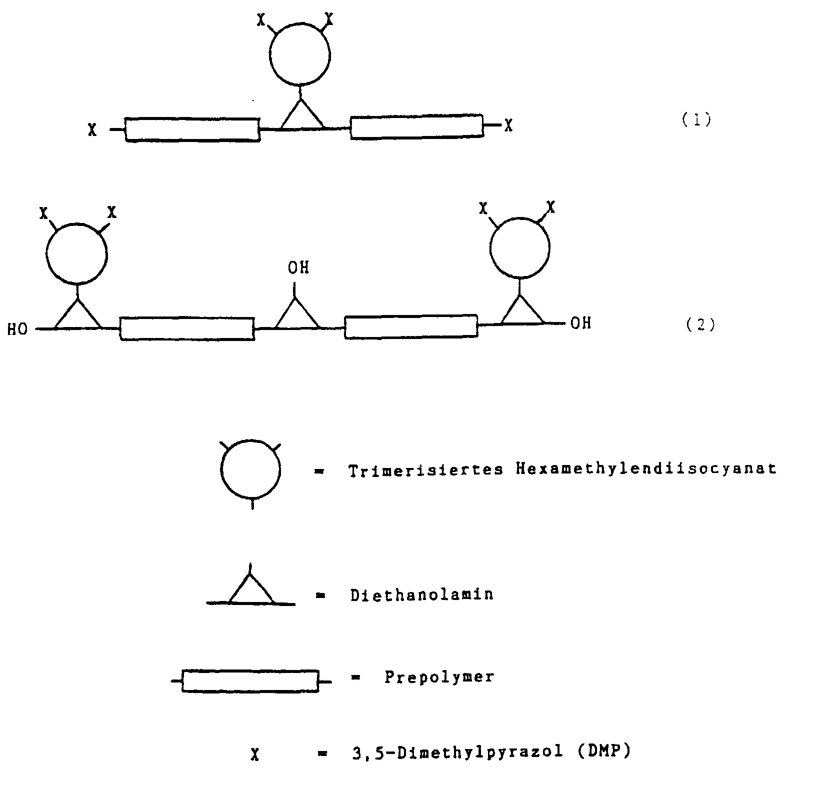

Zur Herstellung des Polyurethanprepolymers sind grundsätzlich alle üblichen Polyole, beispielsweise im Bereich der Lackchemie übliche Polyester- und/oder Polyetherpolyole geeignet. Diese sind dem Fachmann bekannt und brauchen hier nicht näher erläutert zu werden. Vorzugsweise wird ein Polyesterdiol eingesetzt, welches aus Isophthalsäure, Dimerfettsäure und Hexandiol erhältlich ist und ein zahlenmittleres Molekulargewicht von 1000 - 2000, vorzugsweise von 1200 - 1600, aufweist. Zur Herstellung des Polyurethanprepolymers sind weiterhin alle gebräuchlichen Polyisocyanate A, insbesondere Diisocyanate, geeignet. Bevorzugt sind Diisocyanate, deren Isocyanatgruppen an aliphatische oder cycloaliphatische Reste gebunden sind. Beispiele hierfür sind: Hexamethylendiisocyanat, Isophorondiisocyanat, Trimethylhexamethylendiisocyanat und insbesondere Dicyclohexylmethandiisocyanat.

Die Pyrazolverbindung weist vorzugsweise die allgemeine Formel 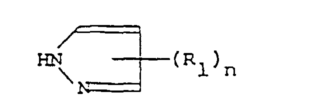 auf, wobei n eine natürliche Zahl ist, R¹ bei n>1 gleich oder verschieden sein kann und R¹ alkyl, alkenyl, aralkyl, N-substituiertes carbamyl, phenyl, NO₂, Halogen oder -COOR² mit R² gleich C₁-C₄ alkyl ist. Besonders bevorzugt ist es, wenn die Pyrazolverbindung aus der Gruppe "3,5-Dimethylpyrazol, 3-Methylpyrazol, 4-Nitro-3,5-dimethylpyrazol, 4-Bromo-3,5-dimethyl-pyrazol" ausgewählt oder eine Mischung von Elementen dieser Gruppe ist.

Je nach Ausführungsform der Erfindung - OH-gruppenhaltige oder OH-gruppenfreie, als Vernetzungsmittel funktionierende Verbindungskomponente - liegt das molare Verhältnis der freien OH-Gruppen des kettenverlängerten Polyurethanpolymers zu unblockierten Isocyanatgruppen des Polyisocyanats B in Bereich von 5:1 bis 5:3 (1. Alternative) oder von 1:3 bis 1:1 (2. Alternative).

Sofern von der als Vernetzungsmittel funktionierenden Verbindungskomponente verschiedene Substanzen als OH-funktionelle Bindemittelkomponente eingesetzt werden, so können diese die in der Lacktechnik üblichen Substanzen sein, die dem Fachmann gut bekannt sind. Lediglich beispielhaft werden erwähnt: hydroxyfunktionelle Polyacrylate, hydroxyfunktionelle Polyester und Polyether, hydroxyfunktionelle Polyurethane.

Ein erfindungsgemäßes Überzugsmittel kann sowohl als konventionelles System mit organischen Lösemitteln als auch als wasserverdünnbares System formuliert sein. In letzterem Fall empfiehlt es sich, auf übliche Weise ionische Gruppen in die Verbindungskomponenten einzuführen, um eine Dispergierbarkeit in Wasser zu ermöglichen. Eine Neutralisierung und/oder pH-Wert Einstellung kann auf übliche Weise, z.B. mit üblichen Aminen, durchgeführt werden. Ein erfindungsgemäßes Überzugsmittel kann weiterhin als Grundierung, als Füller, als (dekorativer) Basislack oder als Klarlack formuliert sein. Bei den ersten drei genannten Formulierungen werden Füllstoffe und oder Pigmente beigegeben. In allen Formulierungen können übliche Hilfsmittel und Additive wie Verlaufsmittel, Antioxidantien, UV-Absorber und Radikalfänger beigegeben sein. Besonders bevorzugt ist eine Formulierung als Füller. Typischerweise weist ein erfindungsgemäßes Überzugsmittel einen Festkörpergehalt im Bereich von 20 bis 60%, vorzugsweise von 30 bis 40%, auf. Die Viskosität sollte im Bereich von 2,0 bis 10,0 dPas, vorzugsweise von 3,0 bis 8,0 dPas, (Platte-Kegel-Viskosität gemessen 1:1 in N-Methylpyrolidon bei 23 °C und 1000 s⁻¹) liegen. Die Einstellung der Viskosität erfolgt auf übliche Weise durch Zugabe einer entsprechenden Menge üblicher organischer Lösemittel oder Wasser.

Die Erfindung umfaßt auch ein Verfahren zur Herstellung der Überzugsmittel. Je nach Ausführungsform der Erfindung - OH-gruppenhaltige oder OH-gruppenfreie, als Vernetzungsmittel funktionierende Verbindungskomponente - wird dabei entweder so gearbeitet, daß die als Vernetzungsmittel funktionierende Verbindungskomponente in einem organischen Lösemittel oder in Wasser gelöst oder dispergiert wird und daß lackübliche Zusatzstoffe, ggf. auch Pigmente, zugefügt werden und die Mischung homogenisiert wird, oder daß die als Vernetzungsmittel funktionierende Verbindungskomponente in einem organischen Lösemittel oder in Wasser gelöst oder dispergiert wird, daß zumindest eine, vorzugsweise in einem organischen Lösemittel oder in Wasser gelöste oder dispergierte, OH-funktionelle Bindemittelkomponente mit der als Vernetzungsmittel funktionierenden Verbindungskomponente gemischt wird und daß lackübliche Zusatzstoffe, ggf. auch Pigmente, zugefügt werden und die Mischung homogenisiert wird. Im ersten Fall kann aber auch zusätzlich eine separate OH-funktionelle Bindemittelkomponente zugefügt sein.

Die Erfindung betrifft weiterhin die Verwendung eines Überzugsmittels nach einem der Ansprüche 1 bis 8 zur Herstellung einer Beschichtung auf einem Substrat, vorzugsweise auf einer Kfz-Karosserie oder einem Kfz-Karos- serieteil, sowie die Verwendung eines Überzugsmittels nach einem der Ansprüche 1 bis 8 zur Herstellung einer unterhalb 130 °C einbrennbaren Füllerbeschichtung auf einem Substrat, vorzugsweise auf einer Kfz-Karosserie oder einem Kfz-Karosserieteil.

Im Folgenden wird die Erfindung anhand von Ausführungsbeispielen näher erläutert.

### Beispiel 1

631,2 g eines Polyesterdiols aus Isophthalsäure, Dimerfettsaure und Hexandiol (Mₙ ca. 1400) und 60,4 g Dimethylolpropionsäure werden mit 354,4 g 4,4'-Dicyclohexylmethandiisocyanat (Desmodur W von Bayer) in 448,2 g Ethylmethylketon bei 80°C prepolymerisiert, bis der NCO-Wert konstant läuft. Anschließend werden 36,5 g 3,5-Dimethylpyrazol (DMP) zugesetzt und das Reaktionsgemisch wird 2 Stunden unter Rühren bei 80°C gehalten. Nach Absenkung der Temperatur auf 60°C werden 108,9 g trimerisiertes Hexamethylendiisocyanat (Basonat HI 100 von BASE) und 54,4 g Ethylmethylketon zugegeben und man rührt 30 Minuten bei 60°C bis weitere 36,5 g DMP zugegeben werden. Man hält das Reaktionsgemisch noch eine weitere Stunde bei 60°C und setzt dann zur Kettenverlängerung 20,0 g Diethanolamin und 20 g Ethylmethylketon zu. Nach Abwarten der exothermen Reaktion fährt man das Reaktionsgemisch auf einen NCO-%-Wert von kleiner 0,1. Das Produkt weist dann eine Platte-Kegel-Viskosität von 3,0 bis 6,0 dPas, gemessen 1:1 in N-Methylpyrolidon bei 23°C und 1000 s⁻¹, auf. Nach 70%iger Neutralisation mit Dimethylethanolamin bei 70 - 80°C werden unter starkem Rühren langsam 1972 g destilliertes Wasser zugegeben und dispergiert. Hiernach wird das Ethylmethylketon im Vakuum abdestilliert und 121 g Butyldiglykol (9,7% auf fest) werden zugegeben. Anschließend wird die Dispersion mit destilliertem Wasser auf einen Festkörper von 37% eingestellt.

### Beispiel 2

532,2 g eines Polyesterdiols aus Isophthalsäure, Dimerfettsäure und Hexandiol (Mₙ ca. 1400) und 68,8 g Dimethylolpropionsäure werden mit 397,3 g 4,4'-Dicyclohexylmethandiisocyanat (Desmodur W von Bayer) in 429,8 g Ethylmethylketon bei 80°C prepolymerisiert, bis der NCO-Wert konstant läuft. Nach Absenkung der Reaktionstemperatur auf 60°C werden 258,7 g trimerisiertes Hexamethylendiisocyanat (Basonat HI 100 von BASF) und 367 g Ethylmethylketon zugegeben und wird das Gemisch unter Rühren 30 Minuten bei 60°C gehalten. Anschließend werden 80,9 g 3,5-Dimethylpyrazol (DMP) zugesetzt und das Reaktionsgemisch wird 1 Stunde unter Rühren bei 60°C gehalten. Zur Kettenverlängerung werden dann 86,3 g Diethanolamin und 225,5 g Ethylmethylketon zugesetzt. Nach Abwarten der exothermen Reaktion fährt man das Reaktionsgemisch auf einen NCO-%-Wert von kleiner 0,3. Das Produkt weist dann eine Platt-Kegel-Viskosität von 4,0 bis 8,0 dPas, gemessen 1:1 in N-Methylpyrolidon bei 23°C und 1000 s⁻¹, auf. Nach 70%iger Neutralisation mit Dimethylethanolamin bei ca. 70°C werden 138,1 g Butyldiglykol (9,7% auf Festharzanteil) zugegeben und wird unter starkem Rühren mit 2450 g destilliertem Wasser dispergiert. Hiernach wird das Ethylmethylketon im Vakuum abdestilliert. Anschließend wird die Dispersion mit destilliertem Wasser auf einen Festkörper von 35% eingestellt.

### Beispiel 3 (Vergleichsbeispiel zu Beispiel 1)

631,2 g eines Polyesterdiols aus Isophthalsäure, Dimerfettsäure und Hexandiol (Mₙ ca. 1400) und 60,4 g Dimethylolpropionsäure werden mit 354,4 g 4,4'-Dicyclohexylmethandiisocyanat (Desmodur W von Bayer) in 448,2 g Ethylmethylketon bei 80°C prepolymerisiert, bis der NCO-Wert konstant läuft. Anschließend werden 33,1 g Ethylmethylketoxim (MEK-Oxim) zugesetzt und wird das Reaktionsgemisch 2 Stunden unter Rühren bei 80°C gehalten. Nach Absenkung der Temperatur auf 60°C werden 108,9 g trimerisiertes Hexamethylendiisocyanat (Basonat HI 100 von BASF) und 54,4 g Ethylmethylketon zugegeben und man rührt 30 Minuten bei 60°C bis weitere 33,1 g MEK-Oxim zugegeben werden. Man hält das Reaktionsgemisch noch eine weitere Stunde bei 60°C und setzt dann zur Kettenverlängerung 20,0 g Diethanolamin und 20 g Ethylmethylketon zu. Nach Abwarten der exothermen Reaktion fährt man das Reaktionsgemisch auf einen NCO-%-Wert von kleiner 0,1. Das Produkt weist dann eine Platt-Kegel-Viskosität von 3,0 bis 6,0 dPas, gemessen 1:1 in N-Methylpyrolidon bei 23°C und 1000 s⁻¹, auf. Nach 70%iger Neutralisation mit Dimethylethanolamin bei 70 - 80°C werden unter starkem Rühren langsam 1972 g destilliertem Wasser zugegeben und wird dispergiert. Hiernach wird das Ethylmethylketon im Vakuum abdestilliert und werden 120,4 g Butyldiglykol (9,7% auf fest) zugegeben. Anschließend wird die Dispersion mit destilliertem Wasser auf einen Festkörper von 37% eingestellt.

### Beispiel 4 (Vergleichsbeispiel zu Beispiel 2)

519,4 9 eines Polyesterdiols aus Isophthalsäure, Dimerfettsäure und Hexandiol (Mₙ ca. 1400) und 67,1 g Dimethylolpropionsäure werden mit 387,7 g 4,4'-Dicyclohexylmethandiisocyanat (Desmodur W von Bayer) in 419,5 g Ethylmethylketon bei 80°C prepolymerisiert, bis der NCO-Wert konstant läuft. Nach Absenkung der Reaktionstemperatur auf 60°C werden 262,1 g trimerisiertes Hexamethylendiisocyanat (Basonat HI 100 von BASF) und 372,4 g Ethylmethylketon zugegeben und wird das Gemisch unter Rühren 30 Minuten bei 60°C gehalten. Anschließend werden 74,5 g Ethylmethylketoxim (MEK-Oxim) zugesetzt und wird das Reaktionsgemiscn 1 Stunde unter Rühren bei 60°C gehalten. Zur Kettenverlängerung werden dann 87,4 g Diethanolamin und 222,9 g Ethylmethylketon zugesetzt. Nach Abwarten der exothermen Reaktion fährt man das Reaktionsgemisch auf einen NCO-%-Wert von kleiner 0,3. Das Produkt weist dann eine Platte-Kegel-Viskosität von 3,0 bis 6,0 dPas, gemessen 1:1 in N-Methylpyrolidon bei 23°C und 1000 s⁻¹, auf. Nach 70%iger Neutralisation mit Dimethylethanolamin bei ca. 70°C werden unter starkem Rühren langsam 2545 g destilliertes Wasser zugegeben und wird dispergiert. Hiernach wird das Ethylmethylketon im Vakuum abdestilliert und werden 135,6 g Butyldiglykol (9,7% auf fest) zugegeben. Anschließend wird die Dispersion mit destilliertem Wasser auf einen Festkörper von 35% eingestellt.

### Beispiel 5

Mit den Vernetzungsmitteln gemäß der Beispiele 1 bis 4 wurden durch Zugabe einer üblichen OH-funktionellen Bindemittelkomponente sowie von Füllstoffen Füller hergestellt. Diese wurden auf ein in dem Kfz-Bereich übliches Blech aufgespritzt. Dann wurde bei einer Temperatur von 120 °C für 15 min. eingebrannt. Bei den erhaltenen Überzügen auf Basis der Vernetzungsmittel aus den Beispielen 1 und 2 ergab sich eine ausgezeichnete Schleifbarkeit sowie ein sehr guter Decklackstand subsequent aufgetragener Besislackschichten. Bei den erhaltenen Überzügen auf Basis der Vernetzungsmittel aus den Beispielen 3 und 4 ergab sich eine demgegenüber deutlich verschlechterte Schleifbarkeit, was vermutlich auf die relativ geringe Einbrenntemperatur zurückzuführen ist.

## Patentansprüche

1. Überzugsmittel enthaltend zumindest eine OH-funktionelle Bindemittelkomponente und zumindest eine als Vernetzungsmittel funktionierende Verbindungskomponente mit mit einer Pyrazolverbindung geblockten NCO-Gruppen,
dadurch gekennzeichnet,
daß die als Vernetzungsmittel funktionierende Verbindungskomponente erhältlich ist, indem
a) ein Polyol oder eine Mischung aus Polyolen mit einem zahlenmittleren Molekulargewicht im Bereich von 300 - 5000 durch Zugabe einer Polyisocyanatverbindung A oder einer Mischung aus Polyisocyanatverbindungen A zu einem Polyurethanprepolymer polymerisiert wird,
b) das Polyurethanprepolymer durch Zugabe einer Kettenverlängerungsverbindung zu einem Polyurethanpolymer mit freien OH-Gruppen kettenverlängert wird,
c) das OH-gruppenhaltige Polyurethanpolymer aus b) mit einem Polyisocyanat B oder einer Mischung aus Polyisocyanaten B zu einem Polyisocyanat-Polyurethan-Polymer umgesetzt wird und
d) freie Isocyanatgruppen des Polyisocyanat-Polyurethan-Polymers mit der Pyrazolverbindung oder einer Mischung aus Pyrazolverbindungen blockiert worden sind.

2. Überzugsmittel nach Anspruch 1, dadurch gekennzeichnet, daß die als Vernetzungsmittel funktionierende Verbindungskomponente erhältlich ist, indem ein Teil der freien Isocyanatgruppen des Polyurethanprepolymers und/oder ein Teil der freien Isocyanatgruppen des Polyisocyanats B vor der Kettenverlängerung mit der Pyrazol-Verbindung oder der Mischung aus Pyrazol-Verbindungen geblockt werden.

3. Überzugsmittel nach einem der Ansprüche 1 oder 2, dadurch gekennzeichnet, daß alle freien OH-Gruppen des kettenverlängerten Polyurethanpolymers mit dem Polyisocyanat B oder der Mischung aus Polyisocyanaten B umgesetzt werden und daß die OH-funktionelle Bindemittelkomponente eine von der als Vernetzungsmittel funktionierenden Verbindungskomponente verschiedene Substanz ist.

4. Überzugsmittel nach einem der Ansprüche 1 oder 2, dadurch gekennzeichnet, daß nur ein Teil der freien OH-Gruppen des kettenverlängerten Polyurethanpolymers mit dem Polyisocyanat B oder der Mischung aus Polyisocyanaten B umgesetzt wird und daß zumindest eine OH-funktionelle Bindemittelkomponente identisch mit der als Vernetzungsmittel funktionierenden Verbindungskomponente und folglich selbstvernetzend ist.

5. Überzugsmittel nach einem der Ansprüche 1 bis 4, dadurch gekennzeichnet, daß die Kettenverlängerungsverbindung eine sekundäre Amingruppe sowie zumindest zwei OH-Gruppen aufweist.

6. Überzugsmittel nach einem der Ansprüche 1 bis 5, dadurch gekennzeichnet, daß das Polyol ein aus Isophthalsäure, Dimerfettsäure und Hexandiol erhältliches Polyesterdiol mit einem zahlenmittleren Molekulargewicht von 1000 - 2000, vorzugsweise von 1200 - 1600, ist.

7. Überzugsmittel nach einem der Ansprüche 1 bis 6, dadurch gekennzeichnet, daß die Pyrazol-Verbindung die allgemeine Formel 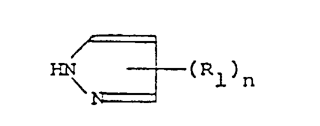 aufweist, wobei n eine natürliche Zahl ist, R¹ bei n>1 gleich oder verschieden sein kann und R¹ alkyl, alkenyl, aralkyl, N-substituiertes carbamyl, phenyl, NO₂, Halogen oder -COOR² mit R² gleich C₁-C₄ alkyl ist.

8. Überzugsmittel nach einem der Ansprüche 1 bis 7, dadurch gekennzeichnet, daß die Pyrazolverbindung aus der Gruppe "3,5-Dimethylpyrazol, 3-Methylpyrazol, 4-Nitro-3,5-dimethylpyrazol, 4-Bromo-3,5-dimethyl- pyrazol" ausgewählt oder eine Mischung von Elementen dieser Gruppe ist.

9. Überzugsmittel nach Anspruch 3, dadurch gekennzeichnet, daß das molare Verhältnis der freien OH-Gruppen des kettenverlängerten Polyurethanpolymers zu unblockierten Isocyanatgruppen des Polyisocyanats B in Bereich von 5:1 bis 5:3 liegt.

10. Überzugsmittel nach Anspruch 4, dadurch gekennzeichnet, daß das molare Verhältnis der freien OH-Gruppen des kettenverlängerten Polyurethanpolymers zu unblokkierte Isocyanatgruppen des Polyisocyanats B in Bereich von 1:1 bis 1:3 liegt.

11. Verfahren zur Herstellung eines Überzugsmittels nach Anspruch 3, dadurch gekennzeichnet, daß die als Vernetzungsmittel funktionierende Verbindungskomponente in einem organischen Lösemittel oder in Wasser gelöst oder dispergiert wird, daß zumindest eine, vorzugsweise in einem organischen Lösemittel oder in Wasser gelöste oder dispergierte, OH-funktionelle Bindemittelkomponente mit der als Vernetzungsmittel funktionierenden Verbindungskomponente gemischt wird und daß lackübliche Zusatzstoffe, ggf. auch Pigmente, zugefügt werden und die Mischung homogenisiert wird.

12. Verfahren zur Herstellung eines Überzugsmittels nach Anspruch 4, dadurch gekennzeichnet, daß die als Vernetzungsmittel funktionierende Verbindungskomponente in einem organischen Lösemittel oder in Wasser gelöst oder dispergiert wird und daß lackübliche Zusatzstoffe, ggf. auch Pigmente, zugefügt werden und die Mischung homogenisiert wird.

13. Verwendung eines Überzugsmittels nach einem der Ansprüche 1 bis 8 zur Herstellung einer Beschichtung auf einem Substrat, vorzugsweise auf einer Kfz-Karosserie oder einem Kfz-Karosserieteil.

14. Verwendung eines Überzugsmittels nach einem der Ansprüche 1 bis 8 zur Herstellung einer unterhalb 130 °C einbrennbaren Füllerbeschichtung auf einem Substrat, vorzugsweise auf einer Kfz-Karosserie oder einem Kfz-Karosserieteil.
